# EUROPEAN PATENT APPLICATION

(11) **EP 4 640 734 A1**
(43) Date of publication of application: **29.10.2025**
(21) Application number: 25169356.0
(22) Date of filing: 09.04.2025
(51) Int. Cl.: C08G 59/42, C08G 59/22, C08H 7/00

(54) **LIGNIN-BASED EPOXY RESINS WITH IMPROVED MECHANICAL AND REPROCESSABILITY PROPERTIES**

(30) Priority: 25.04.2024 LU 507032
(71) Applicant: Kemijski Institut, 1000 Ljubljana (SI)
(72) Inventor: TOFANI, Giorgio, 1000 Ljubljana (SI); LIKOZAR, Blaz, 1000 Ljubljana (SI); JASIUKAITYTE GROJZDEK, Edita, 1000 Ljubljana (SI); ANDRE VICENTE, Filipa Alexandra, 1000 Ljubljana (SI); POGOREVC, Rok, 1000 Ljubljana (SI); GRILC, Miha, 1000 Ljubljana (SI)
(74) Representative: Weickmann & Weickmann PartmbB

(57) **Abstract**

The application provides novel types of lignin-based epoxy resins with improved mechanical and reprocessability properties. Further, methods of preparing the lignin-based epoxy resins and their use in various technical fields are disclosed.

## Description

The application provides novel types of lignin-based epoxy resins with improved mechanical and reprocessability properties. Further, methods of preparing the lignin-based epoxy resins and their use in various fields are disclosed.

### Introduction

Bio-based polymer materials from renewable sources are attracting increasing interest as substitutes for conventional polymers in order to reduce the dependency on fossil fuel-based polymers. Many bio-based polymers alone may not have sufficient mechanical properties for desired applications but in combination with other building blocks they can be processed into high quality material that fulfil all requirements. Moreover, one of the main limits of current materials is the lack of reprocessability reducing the life-time of the materials.

Lignin is a renewable aromatic polymer found in plants where it binds cellulose and hemicellulose fibers and provides stiffness to the plants. It is a highly branched three-dimensional polymer with monomeric phenyl propanoid units linked mainly by ether bonds. Approximately 50 million tons of lignin are currently produced per year as a by-product of the pulp and paper industry and this amount is likely to increase in the future. A major part of lignin recovered by industry is used as fuel, but it also finds interest as a nucleating agent, copolymer or filler for enhancing mechanical and thermal properties of different synthetic and bio-derived polymer matrices. Creating products from lignin offers an approach towards sustainable development of materials.

Also in the context of epoxy resins lignin has been studied as a component possibly replacing petroleum-based monomers. The use of lignin as a hardener in epoxy resins has been described. However, it often leads to unsatisfactory mechanical and reprocessability properties for the resulting epoxy composites. Furthermore, previous experiments concentrate on a combination of lignin with aromatic epoxides like bisphenol-A-based epoxides. Due to the aromatic structure of phenol-based lignin, it is more easily miscible with aromatic epoxides such as bisphenol-A and can then be caused to react with them. However, a clear disadvantage of aromatic epoxides, and in particular bisphenol-A-based epoxides is their high toxicity. Moreover, the polymer products resulting from these components are very rigid, which limits possible applications. Moreover, conventional epoxy resin contains as crosslinking agents, diamine compounds, that improve the properties but do not allow the reprocessability.

It was thus the problem underlying the present application to provide novel lignin-based epoxy resins with improved mechanical and reprocessability properties that do not require the application of toxic aromatic epoxides and diamine crosslinkers.

In the present invention, it was found that the reactivity of lignin can be increased by functionalization with the introduction of carboxylic acid groups to such an extent that it is miscible with a large number of aliphatic epoxy monomers, oligomers and polymers can be reacted with these to form lignin-based epoxy resins which have advantageous mechanical properties. Moreover, novel functional groups formed allow the reprocessability of the epoxy resin. The use of aliphatic monomeric, oligomeric and polymeric epoxides makes the resulting polymer products significantly more flexible and less rigid compared to polymers obtained from aromatic epoxide monomers. They can be produced under less toxic conditions and the end product is also more environmentally friendly.

Thus, according to a first aspect, the invention provides a curable composition comprising:
(i) functionalized lignin,
(ii) an aliphatic epoxide, and
(iii) a catalyst selected from an imidazole catalyst, an organic acid, and an organometallic compound,
wherein the functionalized lignin is lignin, wherein one or more hydroxyl groups are esterified with cyclic anhydrides, preferably, succinic anhydride, glutaric anhydride, adipic anhydride and/or maleic anhydride.

Lignin isolated from plant sources includes various different types of hydroxyl groups. Functionalization of these hydroxyl groups with carboxylic acid groups via esterification with cyclic anhydrides, preferably, succinic anhydride, glutaric anhydride, adipic anhydride and/or maleic anhydride, significantly increases the reactivity of the lignin and improves miscibility with aliphatic epoxides, which can be monomeric, oligomeric or polymeric epoxides. According to the invention, one or more types of hydroxyl groups present in lignin can be esterified, preferably aliphatic hydroxyl groups.

The functionalized lignin (i) can be derived from a soluble fraction of lignin. There is a wide range of lignin sources available, including: jute, hemp, cotton, and wood pulp. The lignin's physical and chemical behavior will be different with respect to the original source and extraction method used. The properties of a lignin-based epoxy resin can therefore be controlled by the choice of lignin used.

There are different methods known in the art for isolating a soluble fraction of lignin. Suitable solvents include tetrahydrofuran, methanol or 2-methyltetrahydrofuran. In particular aspects of the invention, the functionalized lignin (i) is present as a solution in a solvent, for example selected from tetrahydrofuran, methanol or 2-methyltetrahydrofuran. These solvents are favorable as they are also suitable for dissolving aliphatic epoxides, in particular aliphatic monomeric, oligomeric or polymeric epoxides.

The aliphatic epoxides (ii) can be monomeric, oligomeric or polymeric epoxides. They can be linear or branched and cycloaliphatic epoxides are also possible. Examples of suitable epoxides are 1,4-butanediol diglycidyl ether, dipropylene glycol diglycidyl ether, polyethylene glycol diglycidyl ether, polypropylene glycol diglycidyl ether, neopentyl glycol diglycidyl ether, polydimethylsiloxane diglycidyl ether, ethylene glycol diglycidyl ether, 2-[(2-{2-[(oxiran-2-yl)methoxy]ethoxy}ethoxy)methyl]oxirane, glycerol diglycidyl ether, 1,4-cyclohexanedimethanol diglycidyl ether, 1,2,7,8-diepoxyoctane, 1,3-butanediol diglycidyl ether, and 1,3-bis(3-glycidyloxypropyl)tetramethyldisiloxane. Linear aliphatic epoxides are particularly preferred. Most preferably, the epoxide is a strictly linear aliphatic monomer, oligomer or polymer without any side chains or substituting side groups. In this case, the resulting epoxy resin is especially flexible.

The catalyst (iii) provided in a curable composition of the invention can be an imidazole catalyst, preferably an alkylimidazole like methylimidazole or 2-ethylimidazole. Other suitable catalysts (iii) include organic acids, which can be carboxylic acids or sulfonic acids, with a pKa between 5 and -15. A particularly preferred example of an organic acid-based catalyst is p-toluene sulfonic acid. Other suitable organic acids include benzenesulfonic acid, p-phenolsulfonic acid, 2, 4-dimethylbenzenesulfonic acid, naphthalenesulfonic acid, p-toluenesulfonic acid, and formic acid. Moreover, organometallic compounds can be selected as the catalyst (iii) in a composition of the invention. Suitable organometallic catalysts contain zinc, tin, titanium, copper, bismuth, silver, aluminum or cobalt, with oxygen containing ligand(s) directly connected to the aforementioned metals. Exemplary organometallic catalysts include titanium butoxide (TBT), titanium isopropoxide (TIS), zinc acetate, tin(II) 2-ethylhexanoate (alternative name is tin(II)-octoate), aluminum acetylacetonate, aluminum isopropoxide, aluminum chloride, and bismuth(III) triflate. A particularly preferred example of an organometallic catalyst is Zn(acac)₂.

Another aspect of the invention is an epoxy resin obtained by curing the above composition.

The application also provides an improved method for preparing a lignin-based epoxy resin. The procedure comprises the steps of
a) providing a soluble fraction of lignin,
b) esterification of one or more hydroxyl groups present in the soluble fraction of lignin with succinic anhydride, glutaric anhydride or maleic anhydride to yield functionalized lignin with a higher carboxylic acid content, and
c) reacting the functionalized lignin obtained in step (ii) with an aliphatic epoxide,
wherein steps b) and c) are carried out in the presence of the same catalyst.

In step (a), a soluble fraction isolated from lignin is provided. The source from which the lignin originates can be freely selected by the skilled person, enabling him to control the properties of the lignin. Preferably, the soluble fraction of lignin is provided in an organic solvent. Suitable solvents include for example THF, methanol, 2-methyltetrahydrofuran, and acetone. The dissolution of lignin may be assisted by stirring or slightly heating the mixture to a temperature of 20-30°C.

In the esterification in step (b), the soluble fraction of lignin is contacted with a carboxylic anhydride, selected from cyclic anhydrides, preferably, succinic anhydride, glutaric anhydride, adipic anhydride and maleic anhydride, in the presence of a catalyst, to yield functionalized lignin with a higher carboxylic acid content. One or more types of hydroxyl groups present in the soluble fraction of lignin can thus be functionalized. Preferably, functionalization is affected at aliphatic hydroxyl groups.

The soluble fraction of lignin and the carboxylic anhydride can be reacted in a weight ratio in a range of about 20:1 to 0.1:1, preferably 10:1 to 2:1, more preferably about 4:1.

The catalyst used in the esterification step b) is the same as the catalyst used in the reaction in step c). In the invention, it was found that special types of catalysts are suitable to catalyze the reaction in both of these steps. The catalyst can be an imidazole catalyst, preferably an alkylimidazole like methylimidazole or 2-ethylimidazole. Other suitable catalysts include organic acids, which can be carboxylic acids or sulfonic acids, with a pKa between 5 and -15. A particularly preferred example of an organic acid-based catalyst is p-toluene sulfonic acid. Other suitable organic acids include benzenesulfonic acid, p-phenolsulfonic acid, 2, 4-dimethylbenzenesulfonic acid, naphthalenesulfonic acid, p-toluenesulfonic acid, and formic acid. Moreover, organometallic compounds can be used, Suitable organometallic catalysts contain zinc, tin, titanium, copper, bismuth, silver, aluminum or cobalt, with oxygen containing ligand(s) directly connected to the aforementioned metals. Exemplary organometallic catalysts include titanium butoxide (TBT), titanium isopropoxide (TIS), zinc acetate, tin(II) 2-ethylhexanoate (alternative name is tin(II)-octoate), aluminum acetylacetonate, aluminum isopropoxide, aluminum chloride, and bismuth(III) triflate. A particularly preferred example of an organometallic catalyst is Zn(acac)₂. According to the invention, imidazole catalysts and especially alkylimidazoles like methylimidazole yield particularly favorable results.

The esterification reaction is preferably carried out with stirring at a temperature in a range of 20-200°C, preferably 40-80°C or 50-70°C. In particular, a temperature of about 60°C is suitable for achieving the desired degree of esterification. After about 3-6 hours the reaction is completed.

In step (c), the functionalized lignin obtained in step (b) is contacted with an aliphatic epoxide under conditions suitable for crosslinking. The aliphatic epoxide can be a monomeric, oligomeric or polymeric epoxide. It can be linear or branched and cycloaliphatic epoxides are also possible. Examples of suitable epoxides are 1,4-butanediol diglycidyl ether, dipropylene glycol diglycidyl ether, polyethylene glycol diglycidyl ether, polypropylene glycol diglycidyl ether, neopentyl glycol diglycidyl ether, polydimethylsiloxane diglycidyl ether, ethylene glycol diglycidyl ether, 2-[(2-{2-[(oxiran-2-yl)methoxy]ethoxy}ethoxy)methyl]oxirane, glycerol diglycidyl ether, 1,4-cyclohexanedimethanol diglycidyl ether, 1,2,7,8-diepoxyoctane, 1,3-butanediol diglycidyl ether, and 1,3-bis(3-glycidyloxypropyl)tetramethyldisiloxane. Linear aliphatic monomeric, oligomeric and polymeric epoxides are particularly preferred. Most preferably, the epoxide is a strictly linear aliphatic epoxide without any side chains or substituting side groups. In this case, the resulting epoxy resin is especially flexible.

In a preferred embodiment of the invention, the reaction product of the esterification step (b) is directly used for cross-linking a desired aliphatic epoxy without any previous purification or isolation step. The same catalyst of step b is used. Thus, in this embodiment the epoxy monomer, oligomer or polymer can be added directly to the reaction product obtained in step (b). In this case it is essential that the solvent that was applied previously is also suitable for dissolving the aliphatic epoxide.

In an alternative embodiment, if it is not desired to immediately process the functionalized lignin obtained as described above, it may be separated from the reaction mixture, e.g. by vaporizing the solvent, and the resulting solid can be dried in vacuum. The functionalized lignin is then obtained as a powder, which can be applied for the cross-linking of an epoxy monomer, oligomer or polymer at a later stage.

The reaction with the epoxy monomer is carried out in a solvent in which both the functionalized lignin and the aliphatic monomeric, oligomeric and polymeric epoxide are solvable. The reaction may be initiated by an imidazole catalyst, preferably an alkylimidazole like methylimidazole or 2-ethylimidazole. Other suitable catalysts include organic acids, which can be carboxylic acids or sulfonic acids, with a pKa between 5 and -15. A particularly preferred example of an organic acid-based catalyst is p-toluene sulfonic acid. Other suitable organic acids include benzenesulfonic acid, p-phenolsulfonic acid, 2, 4-dimethylbenzenesulfonic acid, naphthalenesulfonic acid, p-toluenesulfonic acid, and formic acid. Moreover, organometallic compounds can be used. Suitable organometallic catalysts contain zinc, tin, titanium, copper, bismuth, silver, aluminum or cobalt, with oxygen containing ligand(s) directly connected to the aforementioned metals. Exemplary organometallic catalysts include titanium butoxide (TBT), titanium isopropoxide (TIS), zinc acetate, tin(II) 2-ethylhexanoate (alternative name is tin(II)-octoate), aluminum acetylacetonate, aluminum isopropoxide, aluminum chloride, and bismuth(III) triflate. A particularly preferred example of an organometallic catalyst is Zn(acac)₂.

Crosslinking is preferably carried out at a temperature in a range of 20-400°C, preferably 100-180°C, such as about 130°C or 160°C.

Afterwards, the reprocessability properties can be determined. Broken samples are self-healed by hot-pressing procedure heating at temperatures between 100-180°C, preferably 130-160°C for 1 hour in presence or not of fresh aliphatic monomeric, oligomeric or polymeric epoxide.

The invention shall be further described by reference to the following examples and figures.

### Figures

**Fig. 1****:** Aliphatic monomeric, oligomeric and polymeric epoxides used for preparing lignin-based epoxy resins
Fig. 2: Characterisation by FT-IR
   A. FT-IR of Kraft lignin
   B. FT-IR of functionalized Kraft lignin
   C. FT-IR of the final epoxy resin
**Fig. 3****:**
   A. T-bone sample for mechanical tests,
   B. epoxy resin having different shapes.

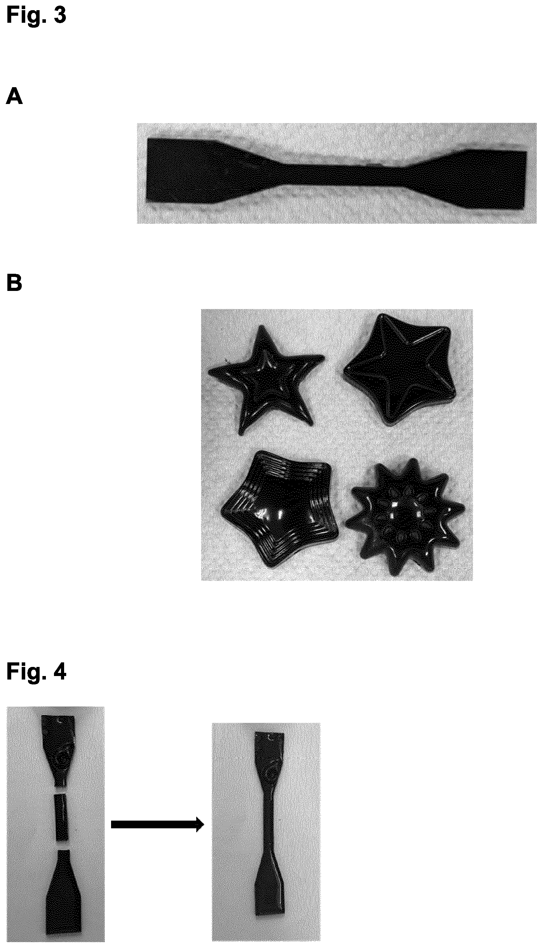

Fig. 4: Reprocessability of epoxy resin

### Examples

### 1. Synthesis of novel formulations of lignin-based epoxy resins

### Procedure

### 1) Functionalisation of lignin (transesterification)

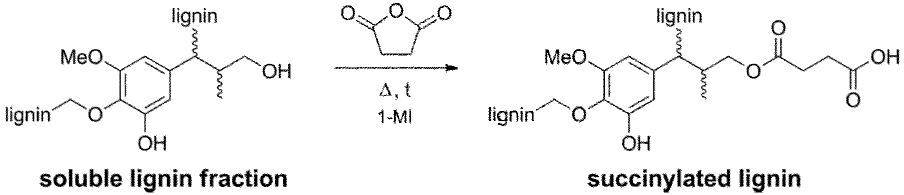

10 g of lignin was weighed and transferred in a glass reactor of 100 ml together with 50 ml of THF. The lignin was stirred for 1 hour at room temperature and 200 rpm. Afterwards, the solution was transferred into two falcons and centrifuged at 8000/min for ten minutes at room temperature. The supernatant was transferred to the reactor, and the solid residue was removed. >90 % of the lignin was solubilised. In the following step, succinic anhydride (20 wt % of the dissolved lignin), and 1-methylimidazole catalyst (0.05 mL/g dissolved lignin) were added to the reactor. The reaction was vigorously stirred for 3 h at 60 °C. In conclusion, the solvent was removed by rotary evaporation, and the resulting solid was dried under vacuum for 24 h.

### 2) Formation of Epoxy resin (crosslinking)

When making T-bones with different epoxides, 1000 mg of functionalised lignin was added to a vial with around 1000 mg of epoxide, in particular polyethylene glycol diglycidyl ether. THF was added until a homogenous solution was obtained. The liquid was injected using a syringe in a T-bone model and dried in the oven for 6 hours at 60 °C and 2 hours at 130 °C. 1-methylimidazole worked as crosslinking catalyst.

### 3) Characterisation and images of final products

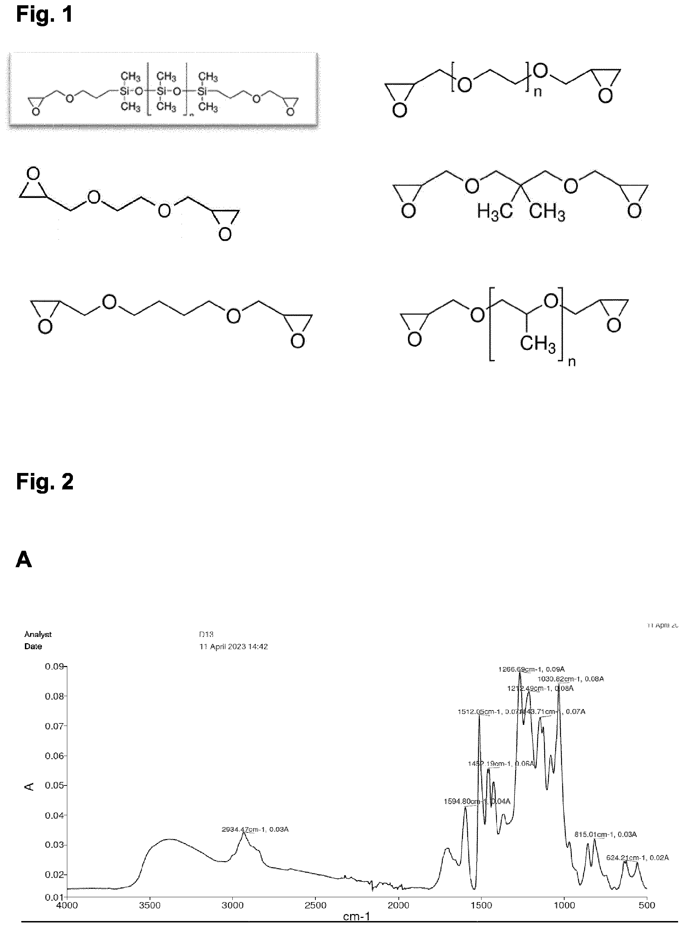

The characterisation was performed using FT-IR because the final resins are insoluble in common solvents. Therefore, FT-IR looks like the best technology for characterisation. The results are presented in Fig. 2 A-C.

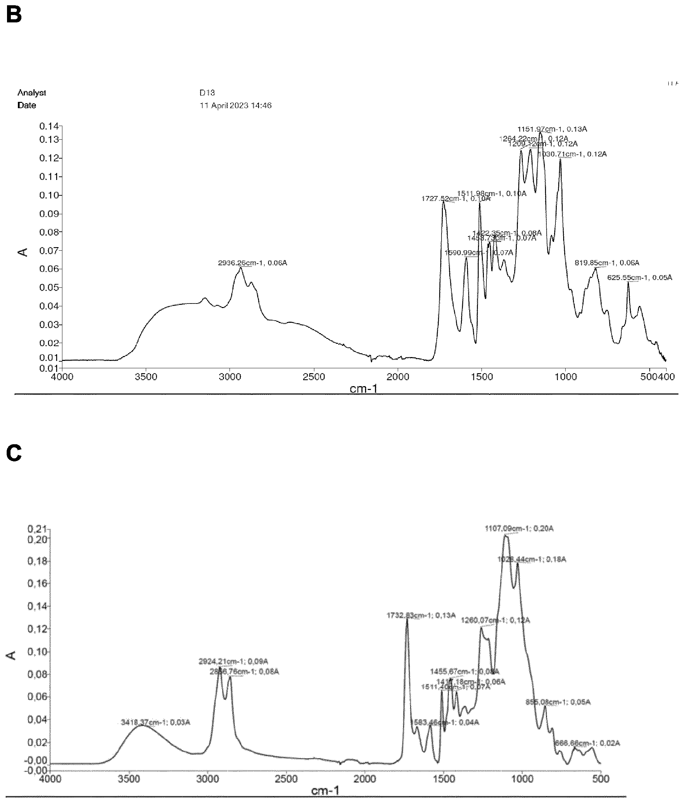

Fig. 2A shows an FT-IR spectrum obtained for the lignin starting material while Figure 2B shows the FT-IR spectrum of functionalized lignin obtained from the esterification step. The main observation, when Fig. 2A and 2B are compared, is the increase in intensity of the band at 1727.52 cm⁻¹, which shows the formation of carboxylic groups.

Fig. 2C shows the FT-IR spectrum after crosslinking with 1,4 butanediol diglycidyl ether. The main observations are:
- More homogenous band at 3418.37 cm⁻¹ (reduction of free -OH groups able to form hydrogen bonds).
- Shift of the carboxyl group from 1727.52 to 1732.83 cm⁻¹. It can be related to the formation of ester groups.
- Increase of intensity at 1107.09 cm⁻¹ due to the formation of ether groups.

### 4) Reprocessability

Broken T-bone model from stage 2) was processed by hot-pressing at 130°C for 1 h to reshape it (Figure 4)

## Claims

1. Curable composition, comprising:
(i) functionalized lignin,
(ii) an aliphatic epoxide
(iii) a catalyst selected from an imidazolium catalyst, more particularly alkylimidazole, such as methylimidazole, an organic acid selected from carboxylic acids and sulfonic acids with a pKa between 5 and -15, in particular p-toluenesulfonic acid and an organometallic catalyst containing zinc, tin, titanium, copper, bismuth, silver, aluminum or cobalt, with oxygen-containing ligand(s) directly connected to the aforementioned metals, in particular Zn(acac)₂,
wherein the functionalized lignin is lignin wherein one or more hydroxyl groups are esterified with cyclic anhydrides, preferably selected from succinic anhydride, glutaric anhydride, adipic anhydride and maleic anhydride.

2. The curable composition of claim 1, wherein in the functionalized lignin, one or more types of hydroxyl groups are esterified, preferably aliphatic hydroxyl groups.

3. The curable composition of claim 1 or 2, wherein the functionalized lignin is derived from a soluble fraction of lignin in solvents such as tetrahydrofuran, methanol and 2-methyl-tetrahydrofuran.

4. The curable composition of any one of claims 1-3, wherein the epoxide is a bifunctional epoxide.

5. The curable composition of any one of claims 1-4, wherein the epoxide is a linear aliphatic and/or a cycloaliphatic epoxide.

6. The curable composition of any one of claims 1-5, wherein the epoxide is selected from the group consisting of 1,4-butanediol diglycidyl ether, dipropylene glycol diglycidyl ether, polyethylene glycol diglycidyl ether, polypropylene glycol diglycidyl ether, neopentyl glycol diglycidyl ether, polydimethylsiloxane diglycidyl ether, ethylene glycol diglycidyl ether, 2-[(2-{2-[(oxiran-2-yl)methoxy]ethoxy}ethoxy)methyl]oxirane, glycerol diglycidyl ether, 1,4-cyclohexanedimethanol diglycidyl ether, 1,2,7,8-diepoxyoctane, 1,3-butanediol diglycidyl ether, and 1,3-bis(3-glycidyloxypropyl)tetramethyldisiloxane.

7. Epoxy resin, obtained by curing the composition of any one of claims 1-6.

8. Method for preparing a lignin-based epoxy resin, comprising the steps of:
(a) providing a soluble fraction of lignin, in particular as a solution in an organic solvent,
(b) esterification of one or more hydroxyl groups, in particular one or more types of hydroxyl groups, present in the soluble fraction of lignin, preferably aliphatic hydroxyl groups, with succinic anhydride, glutaric anhydride, or maleic anhydride to yield functionalized lignin with a higher carboxylic acid content, and
(c) reacting the functionalized lignin obtained in step (b) with an epoxide, preferably an epoxide as defined in any one of claims 4-6, to yield crosslinking,
wherein steps (b) and (c) are carried out in the presence of the same catalyst.

9. The method of claim 8, wherein esterification in step (b) and crosslinking in step (c) are carried out in the presence of a catalyst selected from an imidazolium catalyst, more particularly alkylimidazole, such as methylimidazole, an organic acid selected from carboxylic acids and sulfonic acids with a pKa between 5 and -15, in particular p-toluenesulfonic acid and an organometallic catalyst containing zinc, tin, titanium, copper, bismuth, silver, aluminum or cobalt, with oxygen-containing ligand(s) directly connected to the aforementioned metals, in particular Zn(acac)₂.

10. The method of any one of claims 8-9, wherein the soluble fraction of lignin and the cyclic anhydrides are reacted in a weight ratio in a range of about 20:1 to 0.1:1, preferably 10:1 to 2:1, more preferably about 4:1.

11. The method of any one of claims 8-10, wherein the esterification is carried out at a temperature in a range of 20-200°C, preferably 40-80°C or 50-70°C, in particular at about 60°C.

12. The method of any one of claims 8-11, further comprising a step of isolating the product resulting from step (c).

13. The method of claim 12, wherein the reaction in step (c) is carried out at a temperature in a range of 20-400°C, preferably 100-180°C, such as about 130°C or 160°C.

14. The method of any one of claims 8-13 for preparing the epoxy resin of claim 7.
